# EUROPEAN PATENT APPLICATION

(11) **EP 2 063 598 A1**
(43) Date of publication of application: **27.05.2009**
(21) Application number: 07721724.8
(22) Date of filing: 12.06.2007
(51) Int. Cl.: H04L 29/06

(54) **A RESOURCE DELIVERY METHOD, SYSTEM AND EDGE SERVER**

(30) Priority: 22.09.2006 CN 200610062769; 13.11.2006 CN 200610146672
(71) Applicant: Huawei Technologies Co., Ltd., Shenzhen, Guangdong Province 518129 (CN)
(72) Inventor: GUAN, Hongguang, Shenzhen, Guangdong 518129 (CN)
(74) Representative: Gulde Hengelhaupt Ziebig & Schneider
(86) International application number: PCT/CN2007/070103
(87) International publication number: WO 2008/034352

(57) **Abstract**

The invention provides a method, system for resource delivery and an Edge Server (ES). The method includes: establishing an overlay network by using a plurality of ESs; allocating, by a central server, service resources to each ES in the overlay network; selecting, by a first ES upon receiving the service request from the user device, a second ES in the overlay network according to the service request, wherein the second ES is responsible for a service resource requested by the user device; and delivering, by the second ES, the requested service resource to the user device. With allocating, scheduling and delivery of the resources in the overlay network according to the invention, the ESs no longer need to save all the service resources requested by the user devices, thereby lowering the requirement on the storage capacity of the ESs and cutting down the hardware cost of the ESs.

## Description

The present application claims priority from the Chinese patent application 200610062769.1, entitled "Method, Edge Server and Network for Resource Delivery" filed with the Chinese Patent Office on September 22, 2006 and Chinese patent application 200610146672.9, entitled "Method, Edge Server and Network for Resource Delivery" filed with the Chinese Patent Office on November 13, 2006, the entire content of which is incorporated in the present application by reference herein.

### FIELD OF THE INVENTION

The present invention relates to network communication technologies, and more particularly, to a method, a system and an edge server for resource delivery.

### BACKGROUND

With the rapid development of IP Television (IPTV), delivery of service resources has become an important technology for the IPTV service deployment. Currently, the industry has proposed a system for resource delivery, that is, the Content Delivery Network (CDN). In the currently available Internet, CDN pushes service resources of a website from the backbone network to an edge closest to the user, thereby reducing transmission delay and network jitter and enhancing the transmission effect. As a result, a user may obtain desired service resources with the fastest speed and from a location closest to the user and thus enjoy an orderly and high-quality service.

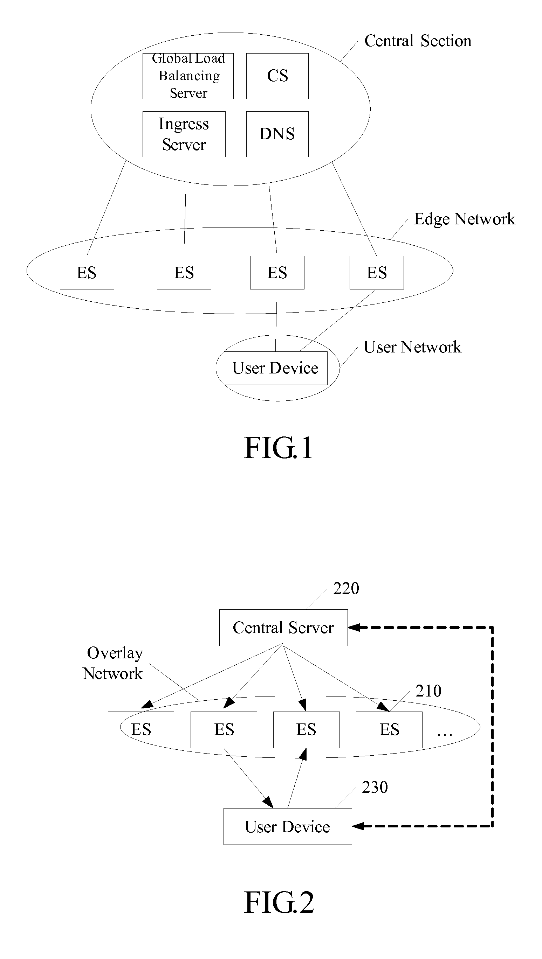

Fig. 1 illustrates a diagram of a CDN configuration in the prior art. As shown in Fig. 1, the CDN mainly includes a central section, an edge network and a user network. The central section includes a central server (CS), a global load balancing server, an ingress server and a domain name server (DNS). The edge network includes a plurality of edge servers (ESs). The user network includes user devices. Herein, the CS transmits service resources to ESs of the edge network for storage. A user device of the user network may only correspond to a few ESs of the edge network, and the few ESs deliver service resources requested by the user devices in the user network for corresponding user devices.

A procedure for resource delivery by the CDN as shown in Fig. 1 includes the following steps: the user device transmits to the ingress server of the central section a server request including address of the user device; the ingress server inquires the DNS and the global load balancing server, and returns to the user device the address of the ES corresponding to the user network where the user device locates, according to the address of the user device and the load balancing condition of the ES; the user device transmits a service request to the ES according to the returned address of the ES; and the ES receives the service request and transmits the requested service resource to the user device.

In the above procedure for resource delivery, the service resource is provided to the user device by the ES corresponding to the user network where the user device locates. Since the user network where a user device locates only corresponds to a few ESs, the ES, which is corresponding to the user network where the user device locates, is required to be able to provide all the service resources requested by the user device, which imposes more requirement on the storage capacity of the ES and makes the hardware cost of the ES high.

### SUMMARY

An embodiment of the present invention provides a method for resource delivery aiming to lower the requirement on the storage capacity of the ES.

Another embodiment of the present invention provides a system for resource delivery aiming to lower the requirement on the storage capacity of the ES.

Another embodiment of the present invention provides an ES aiming to lower the requirement on the storage capacity of the ES.

A method for resource delivery includes:
establishing an overlay network by using a plurality of edge servers (ESs);
allocating, by a central server, service resources to each ES in the overlay network;
selecting, by a first ES in the overlay network upon receiving a service request transmitted by a user device, a second ES in the overlay network according to the service request, the second ES being responsible for a service resource requested by the user device; and
delivering, by the second ES, the requested service resource to the user device.

A system for resource delivery includes a plurality of ESs, a central server and a user device. The ESs are adapted to establish an overlay network, receive and store service resources allocated by the central server, operate as a first ES to select a second ES in the overlay network according to a service request from the user device, upon receiving the service request, and deliver the requested service resource to the user device when being selected as the second ES, the second ES being responsible for the service resource requested by the user device. The central server is adapted to allocate the service resources to each ES in the overlay network. The user device is adapted to transmit the service request to the first ES and receive the service resource delivered by the second ES.

An ES includes a user communication module, a central server communication module, a content scheduling module and a peer-ES communication module. The user communication module is adapted to receive a service request from a user device and transmit the service request to the content scheduling module, and receive service resources provided by the content scheduling module and transmit to the user device. The central server communication module is adapted to receive the service resources and transmit the service resources to the content scheduling module. The content scheduling module is adapted to store the service resources transmitted by the central server communication module, receive the service request transmitted by the user communication module, and select a second ES in an overlay network, the second ES being responsible for the service resource requested by the user device, and if the selected second ES is the ES itself, then the service resource requested by the service device is provided to the user communication module; while if the selected second ES is not the ES itself, then information about the selected second ES and the service request are transmitted to the peer-ES communication module. The peer-ES communication module is adapted to establish an overlay network with other ESs, receive information about the second ESs and the service request transmitted by the content scheduling module, and forward the service request to the second ES, as well as receive service requests forwarded by other ESs.

It can be seen from the above technical solutions that, with the method, system and ES for resource delivery provided by the embodiments of the invention, an overlay network is established by using a plurality of ESs in an edge network; service resources are allocated to each ES through the overlay network; each ES selects a second ES in the overlay network to deliver a requested service resource to a user device. In this manner, scheduling and delivery of the service resources in the overlay network is implemented. Therefore, each ES only needs to store the service resources allocated to the ES of all the service resources that may be requested by the user devices, that is, the ESs in the overlay network share all the service resources that may be requested by the user devices. In contrast, in the prior art, each ES is required to be able to provide all the service resources that may be requested by the user devices in order to ensure provision of the service resources that may be requested by the user devices. Thus, the method, system and ES provided by the embodiments of the invention may lower the requirement on the storage capacity of the ESs and cut down the hardware cost of the ESs.

### BRIEF DESCRIPTION OF THE DRAWINGS

Figure 1 illustrates a diagram of a CDN configuration in the prior art;

Figure 2 is an architecture diagram of a system for resource delivery according to an embodiment of the present invention;

Figure 3 is a schematic configuration diagram of an ES according to an embodiment of the present invention; and

Figure 4 is a flow chart of a method for resource delivery according to an embodiment of the present invention.

### DETAILED DESCRIPTION

In order to make objects, technical solutions and advantages of the disclosure more apparent, a further detailed description of the disclosure is given below with reference to the accompany drawings.

The method provided by an embodiment of the invention includes:
establishing an overlay network by using a plurality of ESs;
allocating, by a central server, service resources to each ES in the overlay network;
selecting, by a first ES in the overlay network upon receiving a service request from a user device, a second ES in the overlay network according to the service request, the second ES being responsible for a service resource requested by the user device; and
delivering, by the second ES, the requested service resource to the user device.

Here, the first ES may be any ES in the overlay network; and any ES receiving the request from the user device may be referred to as a first ES.

Here, in the above method, the following steps may be implemented based on a Distributed Hash Table (DHT) rule: establishing the overlay network between the plurality of ESs in the edge network, allocating the service resources to each ES in the overlay network by the central server, and selecting the second ES in the overlay network by the first ES. Furthermore, these steps may also be implemented based on other rules.

The DHT rule is known in the prior art, and thus it will not be elaborated here. The DHL rule will only be described briefly here to facilitate the understanding of the invention. The principal concept of the DHT rule is as follows: each file index is expressed as a (K,V) pair, where K is a keyword, which may be a file name or a Hash value of file description information; V is an IP address of a node saving the file or other description information of the node. All the file indices, that is, the (K,V) pairs, form a large file index Hash table, from which addresses of all nodes saving an object file may be retrieved by inputting the K value of the object file. The Hash table may be then partitioned into many small local regions, which are distributed to all the participating nodes in the system according to a specific rule so that each node is responsible for maintaining one of the regions. As a result, when a node queries a file, the querying packet only needs to be routed to the corresponding node. The DHT has an excellent scalability and may realize a large system scale with a relatively low system overload. The DHT also has the following advantages: it may achieve self-configuration and may incorporate a newly-joined node to the system without any human interference; it may provide easy and flexible interfaces. In the method according to embodiments of the present invention, the nodes in the above DHT rule refer to each ES, and the file refers to the service resources.

Firstly, a detailed description will be given to a system for resource delivery according to an embodiment of the present invention. Fig. 2 illustrates an architecture diagram of the system according to an embodiment of the present invention. As shown in Fig. 2, the system includes a plurality of ESs 210, a central server 220 and a user device 230.

Each of the ESs 210 is adapted to establish an overlay network, receive and store service resources allocated by the central server 220, operate as a first ES to select a second ES in the overlay network according to a service request from the user device upon receiving the service request, and deliver the requested service resource to the user device when being selected as the second ES.

The central server 220 is adapted to allocate the service resources to each of the ESs 210 in the overlay network.

The central server may be a media stream server or other devices that may provide the service resources.

The user device 230 is adapted to transmit the service request to the first ES and receive the service resource delivered by the second ES of the plurality of ESs 210.

Furthermore, the user device 230 is further adapted to transmit a server request to the central server 220 and receive address information of some of the plurality of ESs 210 provided by the central server 220.

The central server 220 is further adapted to receive the server request transmitted by the user device 230 and provide the address information of the some of the plurality of ESs 210 to the user device 230.

Furthermore, the central server 220 is further adapted to provide an identification of each ES 210 in the overlay network and a list of service resources to the ES.

Each of the ESs 210 is further adapted to obtain the identification of the ES in the overlay network and the list of service resources provided by the central server 220, perform Hash processing on a name of a service resource in the list of service resources in a Hash space with an identification identical to the ES so as to generate a Hash value of the service resource, and determine, according to the Hash values of the service resources and the DHT rule, service resources that the ES is responsible for.

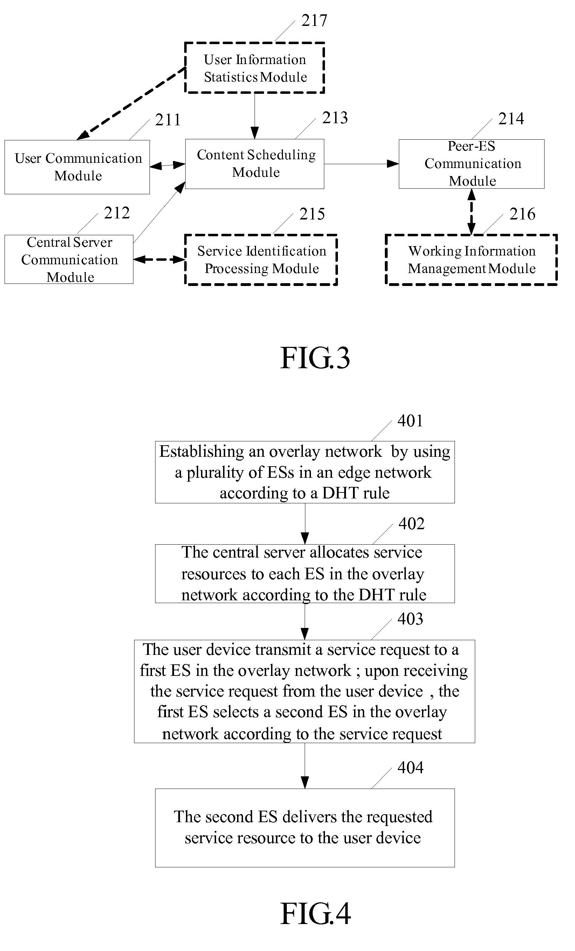

Fig. 3 illustrates an architecture diagram of an ES according to an embodiment of the invention. As shown in Fig. 3, the ES includes a user communication module 211, a central server communication module 212, a content scheduling module 213 and a peer-ES communication module 214.

The user communication module 211 is adapted to receive a service request from a user device and provide the service request to the content scheduling module 213, receive service resources provided by the content scheduling module 213, and transmit the service resources to the user device.

The central server communication module 212 is adapted to receive service resources and transmit the service resources to the content scheduling module 213.

The content scheduling module 213 is adapted to store the service resources transmitted by the central server communication module 212, receive the service request transmitted by the user communication module 211, and select a second ES in the overlay network. Here the second ES is responsible for the service resource requested by the user device. If the selected second ES is the ES itself, then the service resource requested by the service device is provided to the user communication module 211. If the selected second ES is not the ES itself, then information about the second ES and the service request are transmitted to the peer-ES communication module 214.

The peer-ES communication module 214 is adapted to establish the overlay network with other ESs, receive information about the second ES and the service request transmitted by the content scheduling module 213 and forward the service request to the second ES, and receive the service request forwarded by other ESs.

The ES may also include a service identification processing module 215, which is adapted to obtain the identification of the ES in the overlay network and the list of service resources provided by the central server communication module 212, determine the service resources that the ES is responsible for by using the DHT rule and according to the list of service resources and the identification of the ES in the overlay network, and provide the determined list of service resources that the ES is responsible for to the central server communication module 212.

The determining the service resources that the ES is responsible for may involve that, in a Hash space having an identification identical to the ES, the service identification processing module 215 performs Hash processing on the service resource names in the list of service resources to generate the Hash values of the service resources, and determines, according to the Hash values of the service resources and the DHT rule, the service resources that the ES is responsible for.

The central server communication module 212 is further adapted to request the central server to join the overlay network, receive the identification of the ES in the overlay network and the list of service resources provided by the central server, transmit the received identification of the ES in the overlay network and the list of service resources to the service identification processing module 215, and transmit the list of service resources provided by the service identification processing module 215 that the ES is responsible for to the central server.

The ES may also include a working information management module 216, which is adapted to store working information of the ES itself and working information of the other ESs in the overlay network transmitted by the peer-ES communication module 214, and provide the working information of the ES itself to the peer-ES communication module 214.

The peer-ES communication module 214 is further adapted to receive the working information of the other ESs in the overlay network, transmit to the working information management module 216, and transmit the working information of the ES itself provided by the working information management module 216.

The ES may also include a user information statistics module 217, which is adapted to count number of service requests for the same service resource received by the user communication module 211, and transmit an over limit notification to the content scheduling module 213 when the number of concurrent service requests received for the same service resource exceeds a predetermined threshold.

The content scheduling module 213 is further adapted to select a backup ES according to the working information of the other ESs in the working information management module 216 upon receiving the over limit notification transmitted by the user information statistics module 217, and transmit the address information of the backup ES and the service request to the peer-ES communication module 214.

The peer-ES communication module 214 is further adapted to receive the address information of the backup ES, and provide the corresponding service resource and the service request to the backup ES according to the address information of the backup ES.

In the following, the method for resource allocation according to an embodiment of the invention will be described in detail. As shown in Fig. 4, the method may include the following steps:

Step 401: An overlay network is established by using a plurality of ESs in an edge network according to DHT rule.

In this step, establishment of the overlay network by using the plurality of ESs in the edge network enables the sharing and query among the lists of service resources of the plurality of ESs.

A detailed implementation of this step may involve the following steps:

1) The plurality of ESs in the edge network request the central server to establish the overlay network;

2) The central server assigns identification in the overlay network for each ES according to spatial distribution of the plurality of ESs in the overlay network, and delivers address information of the other ESs to each ES. The purpose of assigning the identification in the overlay network for each ES is to ensure that the ES may be uniquely identified in the overlay network served by the ES and that the allocated service resources may be obtained from the central server in a balanced manner automatically according to the DHT rule.

3) Upon receiving the address information of the other ESs in the overlay network, each ES communicates with the other ESs according to the detailed DHT rule so as to establish the overlay network.

After the overlay network is established, when a new ES wants to join the established overlay network, the new ES requests the central sever to join the overlay network; the central server assigns an identification in the overlay network for the new ES according to the spatial distribution of the ESs in the overlay network, delivers address information of the other ESs in the overlay network to the new ES, and delivers address information of the new ES to the other ESs in the overlay network; upon receiving the address information of the other ESs in the overlay network, the new ES communicates with the other ESs according to the detailed DHT rule and joins the overlay network.

Step 402: The central server allocates service resources to each ES in the overlay network according to the DHT rule.

After joining the overlay network successfully, an ES requests the central server to allocate service resources, which ensures the balanced distribution of all the service resources in the whole overlay network. The process may include the following steps:

1) Each ES in the overlay network requests a list of service resources from the central server.

2) Upon receiving the list of service resources, the ES performs Hash processing on a service resource name or a keyword that may uniquely identify the service resource in the list, in a Hash space with an identification identical to the ES so as to generate a Hash value of the service resource.

3) The ES determines a list of service resources that should be stored by the ES itself, according to Hash values of the service resources and the DHT rule.

4) If the ES joins the overlay network when the network is established, then the ES requests the central server for corresponding service resource according to the list of service resources that should be stored by the ES itself. The central server transmits the service resource corresponding to the list of service resources to the ES for storage. If the ES joins the overlay network after the network is established, then the ES only needs to share the service resources stored by the other ESs according to the DHT rule. The other ESs back up corresponding service resources in the newly-joined ES and then revise their lists of service resources and delete the service resources that are backed up to the newly-joined ES.

The above steps for allocating the service resources are mainly applicable to non-fixed services, such as the on-demand service in IPTV. When they are applied to fixed services such as the live broadcast service in IPTV, the above process for allocating the service resources is as follows: after performing Hash processing on the name of the service resource or a keyword that may uniquely identify the service resource in the list of service resources, the central server determines, according the DHT rule, the service resource that each of the ESs in the overlay network of the edge network is responsible for, and then pushes the service resource that the ES is responsible for to the ES.

Step 403: The user device transmits a service request to a first ES in the overlay network. Upon receiving the service request from the user device, the first ES selects a second ES in the overlay network according to the service request.

This step may involves the following steps:

1) The user device transmits a server request to the central server;

2) The central server returns addresses of some of the ESs to the user device, randomly or according to a predetermined rule;

3) The user device initiates a service request to a first ES of the some of the ESs, according to the addresses of the ESs returned by the central server;

4) Upon receiving the service request, the first ES inquires a second ES in the overlay network, according to the Hash value of the service resource requested by the user device, and forwards the service request to the second ES. The second ES is responsible for the service resource requested by the user device.

Furthermore, in step 2), the central server may return address of one ES to the user device randomly or according to a defined rule. Thus, in step 3), the user device may transmit a service request to the ES according to the address of the ES returned by the central server.

Step 404: The second ES delivers the requested service resource to the user device.

If the requested service resource is stored locally in the second ES, the second ES transmits the service resource to the user directly. If the requested service resource is not stored locally, then the second ES downloads the service resource from the central server and forwards the service resource to the user device.

Furthermore, when delivering the service resource to the user device by the ES, the following situation might occur, that is, a certain service resource is requested by a large number of users in a short time, which causes a large traffic pressure on the edge server storing the service resource and may paralyze the network. The following measures may be taken with respect to the above situation:

1) While providing the service resource to the user device, the ES records information of all the user devices requesting the service resource;

2) When the number of user devices that concurrently request the service resource reaches the predetermined threshold, the ES backs up the service resource to one or more ESs in the overlay network and saves an address link table locally.

3) When a new user device requests the service resource, the ES inquires its backup address link table and returns an available backup ES to the user device. The user device again initiates a service request to the backup ES, which in turn provides the service resource to the user service.

In the above steps, in order to ensure that the backup ES may provide the service resource to the user device, the ES providing the service resource to the backup ES should check the working load condition of the backup ES periodically. When the backup ES cannot provide the service resource any longer, the ES providing the service resource to the backup ES may re-choose or add a new backup ES, so that the service resource may be provided normally.

More preferably, after the overlay network is established, when the ES provides the service resource to the user device, working condition of each ES should be maintained so as to manage the overlay network and ensure that each ES may serve the users properly. To realize this, the following steps are employed:

1) The central server saves an identification and data format of a maintenance file of all the ESs' information that the central server defines, and transmits the identification and data format to each ES;

2) Each ES performs Hash processing on the identification of the maintenance file to get a Hash value and then determines the ES storing the maintenance file in the overlay network according to the Hash value of the identification of the maintenance file and the DHT rule;

3) Each ES periodically transmits its working information to the ES storing the maintenance file and inquiries the working information of the other ESs from the ES storing the maintenance file. The ES may also back up working information of the other ESs locally for use during communication.

Furthermore, when the requests for a certain service resource from the user devices exceeds a threshold, the ES may also inquiry the working information of the other ESs from the ES storing the maintenance file and choose an ES suitable for working as a backup ES.

It can be seen from the above description, with the method and system for resource delivery and ES according to the embodiments of the invention, an overlay network is established between a plurality of ESs; service resources are allocated to each ES by the overlay network; each ES selects a second ES in the overlay network to deliver a requested service resource to a user device. In this manner, scheduling and delivery of the service resources in the overlay network is implemented so that each ES only needs to store the portion of service resources that are allocated to the ES, of all the service resources that may be requested by the user devices, that is, the ESs in the overlay network share all the service resources that may be requested by the user devices. In contrast, in the prior art, each ES must be able to provide all the service resources that may be requested by the user devices to ensure provision of the service resources that may be requested by the user devices. Thus, the method, system and ES of the invention lower the requirement on the storage capacity of the ESs and cut down the hardware cost of the ESs.

Furthermore, embodiments of the invention make use of the DHT rule for the allocating and the scheduling of the service resources as well as delivery of the service resources in the overlay network, which improves delivery efficiency of the service resources and the scalability of the system so that the resource delivery is more convenient and flexible.

Furthermore, when the number of user devices that concurrently request the same service resource exceeds a predetermined threshold, the service resource is backed up to one or more backup ESs in the overlay network, and the backup ESs deliver the service resource to a new user device requesting for the same service resource. Thereby, the traffic burden of the ESs is reduced. Meanwhile, with this method, the interruption of service caused by a single point fault may be avoided, thus preventing the possible network breakdown and improving the error-tolerance of the system.

The above describes only preferred embodiments of the disclosure, and is not intended to limit the scope of the disclosure. Any modification, equivalent substitution and improvement within the spirit and scope of the disclosure are intended to be included in the scope of the disclosure.

## Claims

1. A method for resource delivery, comprising:
establishing an overlay network by using a plurality of edge servers (ESs);
allocating, by a central server, service resources to each ES in the overlay network;
selecting, by a first ES in the overlay network upon receiving a service request transmitted by a user device, a second ES in the overlay network according to the service request, wherein the second ES is responsible for a service resource requested by the user device; and
delivering, by the second ES, the requested service resource to the user device.

2. The method of claim 1, wherein the establishing an overlay network by using a plurality of ESs comprises:
requesting, by the plurality of ESs, the central server to establish the overlay network;
assigning, by the central server, an identification in the overlay network for each ES according to spatial distribution of the plurality of ESs, and delivering to each ES address information of the other ESs; and
communicating, by each ES upon receiving the address information of the other ESs in the overlay network, with the other ESs according to a DHT rule so as to establish the overlay network.

3. The method of claim 1, wherein, after establishing the overlay network by using the plurality of ESs, the method further comprises:
requesting, by a new ES, the central sever to join the overlay network;
assigning, by the central server, an identification in the overlay network for the new ES according to the spatial distribution of the ESs in the overlay network, delivering address information of the other ESs in the overlay network to the new ES, and delivering address information of the new ES to the other ESs in the overlay network; and
communicating, by the new ES upon receiving the address information of the other ESs in the overlay network, with the other ESs according to the DHT rule so as to join the overlay network.

4. The method of claim 1, wherein the allocating, by the central server, service resources to each ES in the overlay network comprises:
requesting, by each ES in the overlay network, a list of service resources from the central server;
performing, by each ES upon receiving the list of service resources, Hash processing on keywords uniquely identifying the service resources in the list of service resources, in a Hash space with an identification identical to the ES so as to generate Hash values of the service resources; and
determining, by each ES according to the Hash values of the service resources and the DHT rule, a list of service resources that the ES is responsible for.

5. The method of claim 4, wherein after determining the list of service resources that the ES is responsible for, the method further comprises:
if the ES joins the overlay network when the overlay network is established, requesting, by the ES, corresponding service resource to the central server according to the list of service resources that the ES is responsible for; and transmitting, by the central server, the service resources corresponding to the list of service resources to the ES; and
if the ES newly joins the overlay network after the overlay network is established, sharing, by the ES, the service resources stored by the other ESs according to the list of service resources that the ES is responsible for and the DHT rule; and upon backing up the corresponding service resources to the newly-joined ES, revising, by the other ESs, their lists of service resources and deleting the service resources that are backed up to the newly-joined ES.

6. The method of claim 1, wherein the allocating, by the central server, service resources to each ES in the overlay network comprises:
when having performed Hash processing on the keywords uniquely identifying the service resources in the list of service resources, and after having determined the list of service resources that each ES in the overlay network of the edge network should store according to the DHT rule, pushing, by the central server, the service resource that the ES is responsible for to the ES.

7. The method of claim 1, wherein, before the first ES in the overlay network receives the service request transmitted from the user device, the method further comprises:
transmitting, by the user device, a server request to the central server;
returning, by the central server, addresses of some of the ESs in the overlay network to the user device, randomly or according to a predetermined rule; and
initiating, by the user device, the service request to the first ES of the some of the ESs in the overlay network, according to the addresses of the ESs returned by the central server.

8. The method of claim 1, wherein the selecting a second ES in the overlay network according to the service request comprises:
selecting, by the first ES, the second ES in the overlay network according to the Hash value of the service resource requested by the user device.

9. The method of claim 1, wherein the delivering, by the second ES, the requested service resource to the user device comprises:
determining, by the second ES, whether the requested service resource is stored locally, if the requested service resource is stored locally, transmitting the requested service resource to the user device directly; if the requested service resource is not stored locally, downloading the requested service resource from the central server and forwarding the requested service resource to the user device.

10. The method of claim 1, wherein the method further comprises:
counting, by the second ES, the number of all the user devices that concurrently request the service resource;
when the number reaches a predetermined threshold, backing up, by the second ES, the service resource to a further one or more ESs in the overlay network, and saving an address link of one or more backup ESs locally; and
when a new user device requests the service resource, inquiring, by the second ES, the address link, and returning an address of one of the backup ESs, and initiating, by the user device, a service request to the backup ES whose address is returned, which in turn providing the service resource to the user device.

11. The method of claim 10, wherein the method further comprises:
determining an ES for saving a maintenance file in the overlay network, transmitting, by the other ESs, their working information to the ES for saving the maintenance file in the overlay network, and inquiring or backing up working information of the other ESs from the ES for saving the maintenance file; and
when the number of the concurrent request reaches the predetermined threshold, selecting, by the second ES, one or more backup ESs in the overlay network according to the inquired working information of the other ESs, and continuing to execute the step of backing up the service resource to one or more backup ESs in the overlay network;
wherein the maintenance file saves working information of each ES.

12. The method of claim 11, wherein the determining an ES for saving the maintenance file in the overlay network comprises:
saving, by the central server, an identification and data format of the maintenance file for working information of all the ESs that the central server has defined, and transmitting the identification and data format to each ES; and
performing, by each ES, Hash processing on the identification of the maintenance file to get a Hash value, and then determining the ES for storing the maintenance file in the overlay network according to the Hash value of the identification of the maintenance file and the DHT rule.

13. A system for resource delivery comprising a plurality of ESs, a central server and a user device; wherein
the ESs is adapted to establish an overlay network, receive and store service resources allocated by the central server, operate as a first ES to select a second ES in the overlay network according to a service request from the user device, upon receiving the service request, and deliver a requested service resource to the user device when being selected as the second ES, wherein the second ES is responsible for the service resource requested by the user device;
the central server is adapted to allocate the service resources to each ES in the overlay network; and
the user device is adapted to transmit the service request to the first ES and receive the service resource delivered by the second ES.

14. The system of claim 13, wherein
the user device is further adapted to transmit a server request to the central server, and receive address information of some of the ESs of the plurality of ESs provided by the central server; and
the central server is further adapted to receive the server request transmitted by the user device, and provide the address information of the some of the plurality of ESs to the user device, randomly or according to a predetermined rule.

15. The system of claim 13, wherein
the central server is further adapted to provide a list of service resources and an identification of each ES in the overlay network to the ES; and
the ES is further adapted to obtain the list of service resources and the identification of the ES itself in the overlay network provided by the central server, and determine, according to the list of service resources and the identification of the ES in the overlay network, the service resources that the ES is responsible for.

16. An ES comprising a user communication module, a central server communication module, a content scheduling module and a peer-ES communication module;
wherein
the user communication module is adapted to receive a service request from a user device and transmit the service request to the content scheduling module, and receive service resources provided by the content scheduling module and transmit the receive service resources to the user device;
the central server communication module is adapted to receive the service resources and transmit the service resources to the content scheduling module;
the content scheduling module is adapted to store the service resources transmitted by the central server communication module, receive the service request transmitted by the user communication module, and select a second ES in an overlay network, wherein the second ES is responsible for the service resource requested by the user device, and the selected second ES is the ES itself, then the service resource requested by the service device is provided to the user communication module; while if the selected second ES is not the ES itself, then information about the selected second ES and the service request are transmitted to the peer-ES communication module; and
the peer-ES communication module is adapted to establish an overlay network with other ESs, receive information about the second ESs and the service request transmitted by the content scheduling module, and forward the service request to the second ES, as well as receive service requests forwarded by other ESs.

17. The ES of claim 16, wherein the ES further comprises a service identification processing module, which is adapted to obtain a list of service resources and an identification of the ES in the overlay network provided by the central server communication module, determine service resources that the ES is responsible for by using a DHT rule and according to the list of service resources and the identification of the ES in the overlay network, and provide the list of service resources that the ES is responsible for to the central server communication module; and
the central server communication module is further adapted to request a central server to join the overlay network, receive the list of service resources and the identification of the ES in the overlay network provided by the central server and transmit the received list of service resources and the identification of the ES in the overlay network to the service identification processing module, and transmit the list of service resources, that the ES is responsible for, provided by the service identification processing module to the central server.

18. The ES of claim 16, wherein
the ES further comprises a working information management module, which is adapted to save working information of the ES itself and working information of the other ESs in the overlay network transmitted by the peer-ES communication module, and provide the working information of the ES itself to the peer-ES communication module; and
the peer-ES communication module is further adapted to receive the working information of the other ESs in the overlay network and transmit to the working information management module, and transmit the working information of the ES itself provided by the working information management module.

19. The ES of claim 16, wherein:
the ES further comprises a user information statistics module, which is adapted to count number of concurrent service requests for the same service resource received by the user communication module, and transmit a over limit notification to the content scheduling module when the number of concurrent service requests exceeds a predetermined threshold;
the content scheduling module is further adapted to select a backup ES upon receiving the over limit notification transmitted by the user information statistics module according to the working information of the other ESs in the working information management module, and transmit address information of the backup ES and the service request to the peer-ES communication module; and
the peer-ES communication module is further adapted to receive the address information of the backup ES, and provide the corresponding service resource and service request to the backup ES according to the address information of the backup ES.
